# EUROPEAN PATENT APPLICATION

(11) **EP 2 586 345 A1**
(43) Date of publication of application: **01.05.2013**
(21) Application number: 12190241.5
(22) Date of filing: 26.10.2012
(51) Int. Cl.: A47J 31/36, A47J 31/40, A47J 43/10, A47J 43/046

(54) **Machine for making and dispensing drink**

(30) Priority: 28.10.2011 IT BS20110151
(71) Applicant: Capitani S.r.l., 22070 Solbiate (CO) (IT)
(72) Inventor: Capitani, Gionata, I-22070 Solbiate (CO) (IT)
(74) Representative: Chimini, Francesco

(57) **Abstract**

A machine for making and dispensing drinks comprising infusion means (10) for the production of a first infused drink by mixing pressurised hot water with an aromatic substance. The machine is further provided with an additional unit (40) for the preparation and dispensing of a second drink and/or of steam. Said additional unit comprises a recipient (42) for a liquid or soluble drink supported adjacent to the infusion means (10) and fitted with a dispensing nozzle (44) of said second drink and/or steam. Dispensing control means (46, 48, 50) are associated to said dispensing nozzle operable at least to permit/prevent the passage of the second drink and/or steam towards a cup, mug or glass placed for example under a dispensing nozzle of the first infused drink.

## Description

The present invention relates to a machine for making and dispensing drinks. In particular, the present invention relates to a machine able to produce an infused drink by mixing pressurised hot water with an aromatic substance, and to heat and/or froth and/or cream a drink obtained from a liquid or soluble product, such as the drink known as "cappuccino".

Machines for the production of an infused drink and fitted with a hot water and steam dispenser tube are already known of. Such machines permit the heating and/or frothing of a drink previously prepared and contained in a cup or glass which the user places under said tube, so that the latter is immersed in the drink. The froth is produced by agitating the cup or glass in relation to the steam dispenser tube.

It is clear that in a machine of this type, the quantity and quality of the froth depends on the skill of the user. In any case, such operation is not particularly easy and the final result is not always repeatable in the same way and with a constant quality. Moreover, the immersion of the end of the steam dispenser tube in the drink to be frothed poses problems of cleaning and therefore of hygiene of the machine.

On the other hand, specific electric appliances are known of for the production of froth from a food liquid such as milk. These appliances comprise a recipient for the liquid and a rotating mixer device positioned in said recipient so as to produce the froth. Said mixer device is commanded to rotate at high speed by an electric motor housed in a body placed under the recipient. In addition, the appliance comprises its own heating means, such as an electric resistor, to heat the liquid to be frothed.

One example of such appliance is described in W02006/050900.

Clearly, such appliances cannot in any way replace a machine for the production of an infused drink, but constitute an additional kitchen appliance. In addition, they are not suitable for frothing or creaming a substance which is not in a liquid state, such as a soluble powder.

The purpose of the present invention is to propose a machine able both to produce and dispense an infused drink and to heat and/or froth and/or cream a soluble or liquid substance so as to obtain a second drink, while at the same time overcoming the drawbacks complained of above in relation to the prior art.

Such purpose is achieved by a machine according to claim 1. The dependent claims describe preferred or advantageous embodiments of the machine for the production of an infused drink.

The characteristics and advantages of the machine according to the invention will, in any case, be evident from the description given below of its preferred embodiments, made by way of a non-limiting example with reference to the appended drawings, wherein:

- figure 1 is an exploded schematic front view of the machine for producing and dispensing drinks according to the invention;

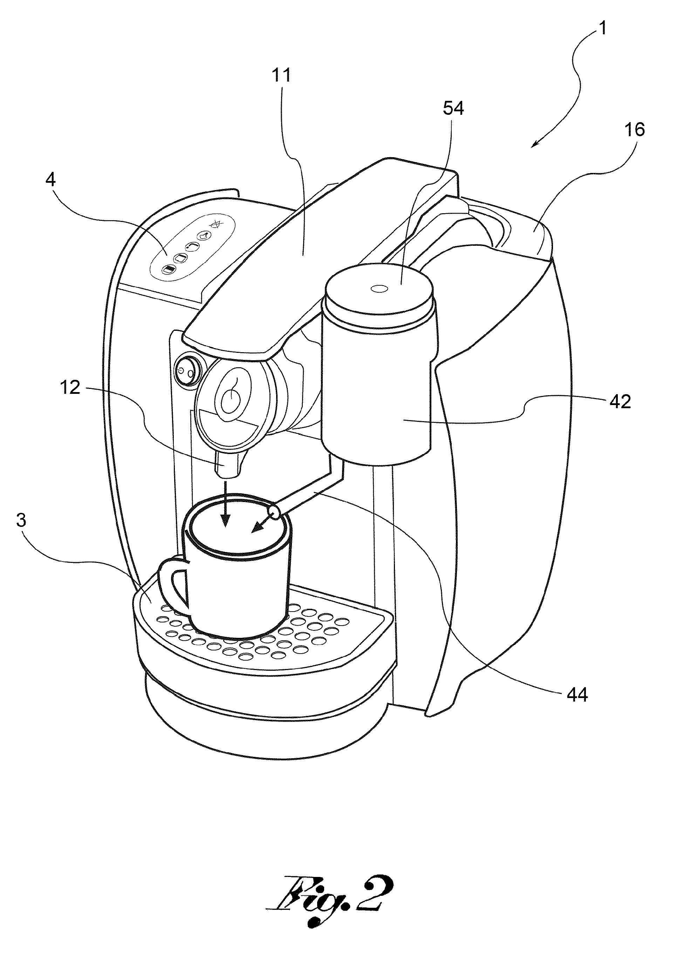

- figure 2 shows the machine assembled;

- figure 3 is a schematic view in elevation of the production unit of the second drink;

- figures 4 and 4a schematically show a detail of the production unit of the second drink, in the two positions of the dispenser nozzle open and closed;

In said drawings, reference numeral 1 globally denotes a machine for the production of drinks according to the invention.

The machine comprises a bearing structure which supports:

infusion means 10 for the production of a first drink, an infused drink, by mixing pressurised hot water with an aromatic substance, such as ground coffee contained in a pod or capsule;

- a tank for the water 16;

- at least one electric pump 18 suitable for pumping a predefined quantity of water from said tank; and

- heating means 30 suitable for heating said quantity of water pumped from the tank.

Said infusion means 10 are supplied with heated water by the heating means 30. The infusion means 10 are, in addition, provided with a first dispensing nozzle 12 facing towards an underlying support surface 3 for a cup, mug or glass.

In the example shown in the drawings, the infusion means 10 comprise an infusion group suitable for receiving a pod or capsule in which the aromatic substance is contained. Such infusion group comprises for example a mobile part and a fixed part which jointly define an infusion chamber. The mobile part, when separated from the fixed part, permits the loading of a pod or capsule in the infusion group; subsequently, the mobile part, operated for example by means of a command lever 11, pushes said pod or capsule into the infusion chamber. The infusion group comprises perforating means of the pod or capsule so that the hot water, supplied for example to the moving part of the infusion group, traverses the pod or capsule forming the drink in the infusion chamber. The first dispensing nozzle 12 extending from the latter.

The machine according to the invention may however also be of the type functioning with an external or filter-holder infusion chamber, associable with the machine, in which a portion of an aromatic substance, for example in powder and/or in a pod, is placed.

The water which supplies the infusion means 10 is contained in the water tank 16.

The water contained in the tank 16 is pumped towards the infusion means 10, in a predefined quantity, by the electric pump 18. The electric pump 18 is in fluidic communication with the tank 16 by means of a first section 20 of a water supply pipe.

The water taken from the tank 16 is heated by heating means 30, positioned downstream of the electric pump 18 and connected thereto by a second section 21 of the water supply pipe. In one embodiment, said heating means 30 comprises a heat exchanger.

The heated water is supplied to the infusion means 10 by a third section 22 of the water supply pipe, which connects the heat exchanger 30 with the infusion means 10.

The machine further comprises an additional unit 40 for the preparation and dispensing of a second drink. Said additional unit 40 comprises a recipient 42 for a liquid or soluble drink, for example milk or chocolate in a liquid or powder state. Said recipient 42 is supported by the bearing structure 2 of the machine, adjacent to the infusion means 10. The recipient 42 is suitable for being supplied with a predefined quantity of water, in the form of steam if necessary, pumped from the tank 16 by the electric pump 18 and heated by said heating means 30. In other words, advantageously, the additional unit 40 shares with the infusion means 10 the same water tank 16, the same electric pump 18 and the same heating means 30.

The recipient 42 is further provided with a second dispensing nozzle 44 of the second drink and/or steam. Dispensing control means are associated to said second dispensing nozzle 44 operable at least to permit /prevent the passage of the second drink and/or steam in said second nozzle 44.

In a preferred embodiment, said control means are electrically operated.

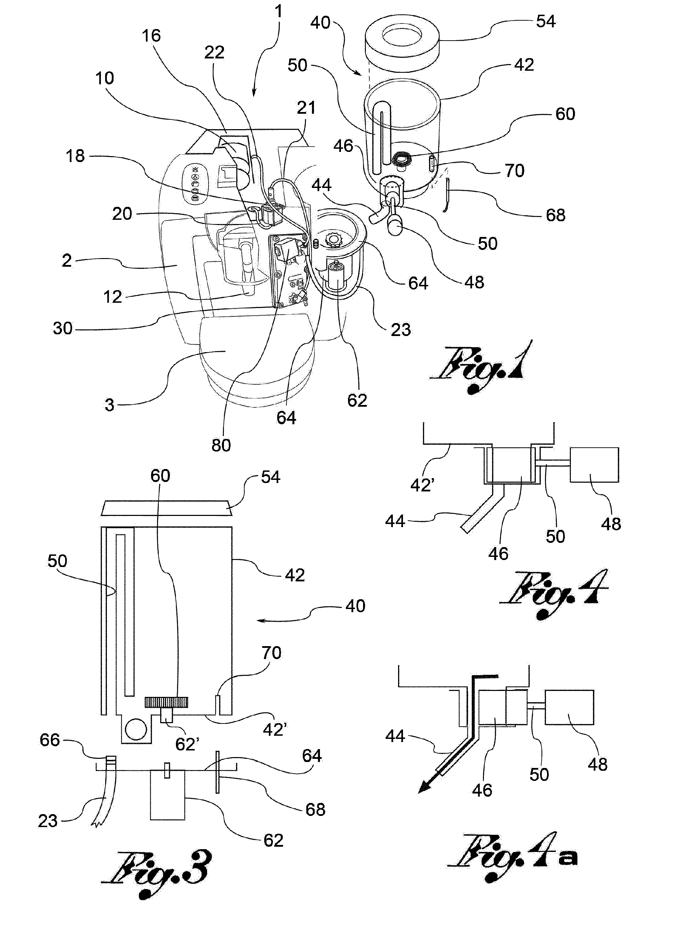

In particular, said control means comprise a movable obturator 46 controlled by an electric motor or by a magnet 48. For example, the movable obturator 46 is in the form of a piston fitted with sealing means, and connected to the motor or to the magnet 48 by means of a connection shaft 50. Said piston 46 is therefore translatable transversally to the direction of flow of the drink in the second dispensing nozzle 44, between a forward closed position of the nozzle 44 (figure 4) and a rearward open position of said nozzle 44 (figure 4a).

In a preferred embodiment, said second dispensing nozzle 44 terminates underneath next to said first dispensing nozzle, so that said first 12 and second 44 nozzles are suitable for dispensing respective drinks into a single mug, cup or glass placed on the support surface 3.

In a preferred embodiment, a steam tube 50 fluidically connected to a duct 23 coming from the heating means extends into the recipient 42.

Preferably, said steam tube 50 extends from the bottom 42' of the recipient 42 and forms an upside-down "U" curve. Advantageously, the steam tube 50 is completely contained in the volume of the recipient 42, that is to say, does not project from the upper aperture of the recipient. This way, the recipient 42 may be fitted with a cover 54 to prevent the spillage of the drink, even when, as will be described further below, the recipient 42 is removed from the machine.

As a result, two hot water supply ducts extend from the heating means 30: the first duct 22 directed towards the infusion means 10 and a second duct 23 directed towards the recipient 42.

According to a preferred embodiment, a vacuum valve is inserted in the steam tube 50 to prevent suction of the drink contained in the recipient 42 into the steam tube 50 as a result of the negative pressure.

According to a particularly advantageous embodiment, a rotating mixer device 60 is inserted in the recipient 42 suitable for frothing or creaming the food liquid contained in the recipient 42. Said mixer device 60 is suitable for being commanded in rotation by an electric motor 62 housed in a motor compartment 64 made in the bearing structure of the machine. Advantageously, said motor compartment 64 is made under the recipient 42.

In one embodiment, the recipient 42 has a perforated bottom 42' for the passage of the motor shaft 62' and the mixer device 60 is mechanically coupled to such shaft 62'.

In one particularly advantageous embodiment variation, the mixer device 60 is magnetically coupled to the shaft 62' of the electric motor, in other words without contact. This way, the bottom of the recipient need not be perforated and it is therefore unnecessary to provide special sealing means between the recipient and the engine shaft. For example, the bottom of the recipient may have a boss, for example of a cylindrical shape, around which the mixer device is fitted with the possibility of low friction rotation.

In one embodiment, the mixer device 60 is an annular or toroidal shape. For example, the mixer device is a toroidal spring. In one embodiment, said toroidal mixer device 60 comprises at least one magnetic or ferromagnetic element.

Advantageously, the boss on the bottom of the recipient forms, seen from the engine compartment side, a recess suitable for holding at least one magnetic or ferromagnetic command element directly connected to the engine shaft of the electric motor. Consequently, the rotation of the engine shaft causes a rotation of the magnetic or ferromagnetic command element which in turn drags in rotation the magnetic or ferromagnetic element of the mixer device.

According to one embodiment, the recipient 42 is fitted in a removable manner in a respective recipient seat 64 made in the support structure 2. The recipient 42 is thus separable from the machine 1.

Advantageously, for example to permit more thorough cleaning of the additional unit , the second dispensing nozzle 44 and the control means 46,48,50 associated thereto are integral with said recipient 42.

In the case of an extractable recipient, the recipient seat 64 is provided with a steam tube connection 66 fluidically connected to the second duct 23 coming out of the heating means 30 and suitable to couple so as to form a seal and detachably with the entrance of the steam tube 50 made in the bottom 42' of the recipient 42.

Advantageously, a temperature sensor 68 is also associated with the recipient 42 suitable for detecting the temperature of the drink contained in said recipient 42. For example, the temperature sensor 68 is fitted onto the recipient seat 64, and a sensor-holder tube 70 is provided in the recipient 42 suitable for receiving the sensor 68 when the recipient 42 is fitted in the respective seat 64.

In a preferred embodiment, the exit aperture of the steam tube 50 is aligned with the entrance of the second dispensing nozzle 44 so as to permit washing with steam and/or hot water of said second nozzle 44.

In order to selectively direct a quantity of water aspirated by the electric pump 18 and heated by the heating means 30 towards the infusion means 10 or towards the recipient 42, the machine comprises deviator means 80 which can be operated by a user, for example by means of a switch provided on a control panel 4. For example, said deviator means 80 comprise a flow deviating solenoid valve positioned downstream of the heating means 30 to direct a flow of heated water towards the first 22 or second exit duct 23 of the heating means 30.

The machine further comprises an electronic circuit board (not shown) to which at least the devices used for the production of the infused drink by the infusion means and for the production of the second drink by the additional unit, are operatively connected, that is to say the electric pump, the heating means, the command motor of the mixer device positioned in the recipient of the additional unit, the control motor or magnet of the movable obturator, the temperature sensor and any other sensors. The electronic circuit board is programmed to activate said devices according to predefined functioning modes. Such functioning modes may for example be chosen by the user by means of the control panel 4.

In one functioning mode, the machine is programmed to make only the infused drink using the infusion means 10. The water aspirated from the tank 16 by the electric pump 18 is heated by the heating means 30. The deviator means 80 are commanded to direct the flow of hot water towards the infusion means 10, wherein the infusion of the aromatic substance contained in a pod or capsule and dispensing thereof through the first dispensing nozzle 12 takes place.

In a second functioning mode, the machine is programmed to make only the second drink using only the additional unit 40. The water taken from the tank 16 by the electric pump passes through the heat exchanger 30 to be heated or made into steam, as needed; the deviator means 80 are commanded to direct the flow of hot water or steam towards the recipient 42, By putting soluble products or milk into the recipient 42, thanks to the hot water or steam coming out of the steam tube 50, said soluble products or milk are dissolved or heated, in part thanks to the action of the mixer device 60. Said mixer device also has the function of creaming or frothing the drinks. Lastly, the electronic circuit board commands the motor or magnet to move the movable obturator, so as to open the second dispensing nozzle 44 to make the drink flow out into a cup, mug or glass placed on the support surface 3. Alternatively, the recipient 42 may be removed from the machine.

In a third functioning mode, the infusion means and the additional unit are activated in succession, to produce both the drinks and dispense them into a single cup, mug or glass, for example to make a cappuccino. In this case, the devices suitable for making the coffee by means of the infusion means are activated first. Once the coffee has been poured into a cup placed on the support surface 3, the deviator means 80 switch so as to direct the steam produce by the heating means 30 towards the recipient 42, which the milk has been poured into. The milk is then heated by the steam and whipped by the mixer device 60. When the milk in the recipient has reached a predefined temperature, the movable obturator 46 opens the second dispensing nozzle 44 and, for example by gravity, the hot milk with the froth is poured into the cup placed on the support surface 3.

Thanks to the fact that the recipient is supplied with water from the tank, soluble products can therefore be used.

Thanks to the presence of the rotating mixer device, the creaming or frothing of the drink achieved is of a constant and desired quality. The steam emitted into the recipient is not used therefore to froth the drink but solely to heat it.

The machine according to the invention is also advantageous from a cost point of view in that it uses the pump and heat exchanger provided to power the infusion group. In addition, by being only slightly larger than a normal domestic coffee machine, it occupies less space than the total space occupied by two separate kitchen appliances such as a traditional coffee machine and a frothing machine.

A person skilled in the art may make modifications and variations to the embodiments of the machine according to the invention, replacing elements with others functionally equivalent so as to satisfy contingent requirements while remaining within the scope of protection as defined by the appended claims. Each of the characteristics described as belonging to a possible embodiment may be realised independently of the other embodiments described.

## Claims

1. Machine for making and dispensing drinks, comprising, supported by a bearing structure (2):
- infusion means (10) for the production of a first infused drink by mixing pressurised hot water with an aromatic substance,
- a tank for the water (16);
- at least one electric pump (18) suitable for pumping a predefined quantity of water from said tank;
- heating means (30) suitable for heating said quantity of water pumped from the tank,
wherein said infusion means (10) are supplied with the water heated by said heating means, and wherein said infusion means are provided with a first dispensing nozzle (12) facing towards an underlying support surface, the machine being **characterised by** the fact of further comprising an additional unit (40) for the preparation and dispensing of a second drink and/or of steam, said additional unit comprising a recipient (42) for a liquid or soluble drink supported by said bearing structure (2) adjacent to the infusion means (10), said recipient being suitable for being supplied with a predefined quantity of water pumped from the tank (16) by said electric pump (18) and heated by said heating means (30), said recipient being fitted with a second dispensing nozzle (44) of said second drink and/or steam, dispensing control means (46, 48, 50) being associated to said second dispensing nozzle operable at least to permit/prevent the passage of the second drink and/or steam in said second dispensing nozzle (44).

2. Machine according to claim 1, wherein said control means are electrically operated.

3. Machine according to claim 2, wherein said control means comprise a movable obturator (46) controlled by an electric motor or by a magnet (48).

4. Machine according to any of the previous claims, wherein said second dispensing nozzle (44) terminates underneath next to said first dispensing nozzle (12), so that said first and second nozzles are suitable for dispensing respective drinks into a single mug, cup or glass placed on said support surface (3).

5. Machine according to any of the previous claims, wherein a steam tube (50) fluidically connected to a duct (23) coming from the heating means extends into said recipient (42).

6. Machine according to the previous claim, wherein said steam tube (50) extends from the bottom of said recipient (42) and forms an upside-down "U" curve.

7. Machine according to any of the previous claims, wherein a mixer device (60) is inserted in said recipient, controlled in rotation by an electric motor (62) housed in a motor compartment made in the support structure of said recipient.

8. Machine according to the previous claim, wherein said mixer device (60) is mechanically or magnetically coupled to the shaft of the electric motor (62).

9. Machine according to any of the previous claims, wherein the recipient (42) is fitted in a removable manner in a respective recipient seat (64) made in the support structure (2).

10. Machine according to the previous claim, wherein the second dispensing nozzle (44) and the control means associated to it are joined to said recipient (42).

11. Machine according to claim 9 or 10, where the recipient seat (64) is fitted with a steam tube connection (66) fluidically connected to said exit duct (23) of the heating means and suitable to couple so as to form a seal and detachably with the entrance aperture of the steam tube (50) made in the bottom of the recipient (42).

12. Machine according to any of the previous claims, in which a temperature sensor (42) is also associated with the recipient (42) suitable for detecting the temperature of the drink contained in said recipient.

13. Machine according to the previous claim, wherein the temperature sensor (68) is fitted onto the recipient seat (64), and wherein a sensor-holder tube (70) is provided in the recipient suitable for receiving the sensor when the recipient is fitted in the respective seat.

14. Machine according to any of the claims from 5 to 13, wherein the exit aperture of the steam tube (50) is aligned with the entrance of the second dispensing nozzle (44) so as to permit washing with steam and/or water of said second nozzle.

15. Machine according to any of the previous claims, comprising deviator means (80) operable so as to direct a quantity of water pumped from the tank alternatively towards the infusion means (10) or towards the recipient (42).

16. Machine according to claim 1, comprising an electronic circuit board to which the devices used to produce the infused drink the electric pump, the heating means, a command motor of a mixer device positioned in the recipient of the additional unit, a control motor or magnet of the movable obturator are operatively connected, said electronic circuit board being programmed to activate said devices according to predefined functioning modes of the machine.
